# DEMANDE DE BREVET EUROPEEN

(11) **EP 1 230 838 A1**
(43) Date de publication de la demande: **14.08.2002**
(21) Numéro de dépôt: 02290214.2
(22) Date de dépôt: 30.01.2002
(51) Int. Cl.: A01G 9/10

(54) **Procédé et dispositif de préhension de mottes dans des plaques alvéolées, notamment pour la transplantation de plants en mottes en culture horticole ou maraîchère**

(30) Priorité: 09.02.2001 FR 0101823
(71) Demandeur: Gerplant Automation, 76410 Tourville la Rivière (FR)
(72) Inventeur: Germaine, Michel, 76350 Oissel (FR)
(74) Mandataire: Casalonga, Axel

(57) **Abrégé**

Pour la préhension d'une motte dans une alvéole 1 d'une plaque alvéolée de semis ou d'élevage telle qu'utilisée en culture horticole ou maraîchère, on utilise une tête de préhension 3 comprenant un élément de support 12 monté mobile en translation verticale et portant les extrémités supérieures d'éléments de préhension 13 en forme d'aiguilles ou de lames, un élément de guidage 9 monté mobile en translation verticale en dessous de l'élément de support pour guider les éléments de préhension de manière qu'ils convergent vers le bas, des moyens de manoeuvre 8, 5 pour déplacer en translation verticale l'élément de support et l'élément de guidage, des moyens de commande pour commander ces moyens de manoeuvre, et des moyens de retenue 15 à 18 effaçables limitant le mouvement de descente de l'élément de support.

## Description

La présente invention se rapporte à un procédé de préhension d'une motte contenue dans une alvéole d'une plaque alvéolée de semis ou d'élevage telle qu'utilisée en culture horticole ou maraîchère, notamment en vue de la transplantation de plants en mottes, ainsi qu'à un dispositif pour la mise en oeuvre de ce procédé.

Pour saisir des mottes dans des alvéoles en tronc de cône ou de pyramide de plaques alvéolées et pour les transférer, par exemple en vue de la transplantation de plants en mottes, il est connu par le document WO/8601975 d'enfoncer au moins deux aiguilles convergentes suivant leurs axes vers le bas dans une motte et de retirer ensuite la motte de son alvéole par un mouvement simultané des aiguilles vers le haut, la motte restant ainsi suspendue aux aiguilles.

Le document EP-A-0 288 873 révèle un dispositif de préhension comprenant au moins deux éléments de préhension opposés de forme allongée, par exemple des lames, qui sont enfoncés verticalement dans une alvéole contenant une motte à saisir et dont les extrémités inférieures libres sont, vers la fin du mouvement d'enfoncement, rapprochées l'une de l'autre pour pincer ainsi la motte, ce qui permet de retirer la motte vers le haut de l'alvéole à l'aide des éléments de préhension.

Il existe par ailleurs d'autres procédés et dispositifs s'inspirant plus ou moins de l'un ou l'autre de ces deux documents.

En vue d'une bonne préhension de la motte dans son ensemble, les éléments de préhension (aiguilles, lames) sont enfoncés dans la motte le plus près possible de la paroi de l'alvéole contenant la motte. Or, les plaques alvéolées dans lesquelles les mottes doivent être prélevées sont véhiculées par des transporteurs sur lesquels les plaques sont guidées avec un jeu relativement important, de sorte qu'il arrive avec les procédés et dispositifs connus que des aiguilles ou lames soient enfoncées non pas dans une alvéole de la plaque, mais directement dans la plaque.

Un autre problème que l'on rencontre avec les procédés et dispositifs connus concerne le détachement de la motte de l'alvéole qui la contient, la motte risquant en effet d'être endommagée, voire désagrégée lorsqu'elle a tendance à adhérer à l'alvéole.

La présente invention vise un procédé et un dispositif de préhension d'une motte dans une alvéole d'une plaque alvéolée, assurant un centrage de l'alvéole sur les éléments de préhension avant l'enfoncement de ces derniers dans la motte, empêchant ainsi tout risque d'enfoncement des éléments de préhension à côté de l'alvéole.

L'invention vise par ailleurs un procédé et un dispositif de préhension d'une motte assurant un meilleur détachement de la motte de l'alvéole qui la contient.

L'invention a donc pour objet un procédé de préhension d'une motte contenue dans une alvéole en tronc de cône ou de pyramide d'une plaque alvéolée de semis ou d'élevage telle qu'utilisée en culture horticole ou maraîchère, par enfoncement vers le bas dans la motte à saisir de plusieurs éléments de préhension allongés en forme d'aiguilles ou de lames, convergeant vers le bas, par un mouvement de descente des éléments de préhension amenant les extrémités inférieures de ces éléments d'une position réciproque écartée à une position réciproque rapprochée, et par retrait de l'alvéole de la motte suspendue aux éléments de préhension, par un mouvement de montée des éléments de préhension, les extrémités inférieures de ces derniers étant maintenues en position rapprochée. Selon l'invention, on amène les extrémités inférieures des éléments de préhension en position rapprochée au-dessus de l'alvéole contenant la motte à saisir. On abaisse ensuite les éléments de préhension pour engager leurs extrémités inférieures dans cette position rapprochée dans la partie supérieure de l'alvéole. On amène alors les extrémités inférieures des éléments de préhension à la position écartée. Enfin, on enfonce les éléments de préhension convergents, dans cette position écartée de leurs extrémités libres, vers le bas dans la motte contenue dans l'alvéole de manière que leurs extrémités libres se rapprochent progressivement.

Grâce au fait qu'on engage les extrémités inférieures des éléments de préhension dans la partie supérieure de l'alvéole en position rapprochée desdites extrémités, les extrémités inférieures des éléments de préhension pénètrent dans la partie supérieure de l'alvéole même lorsque cette dernière est mal centrée par rapport aux éléments de préhension, par exemple du fait du jeu de la plaque alvéolée sur son transporteur. L'écartement subséquent des extrémités inférieures des éléments de préhension dans la parie supérieure de l'alvéole, avant l'enfoncement des éléments de préhension dans la motte, procure alors un centrage de l'alvéole de la plaque par rapport aux éléments de préhension. Les éléments de préhension sont ensuite enfoncés de façon bien centrée par rapport à l'alvéole, et au plus près de la paroi de cette dernière, dans la motte contenue dans l'alvéole, ce qui constitue une condition optimale en vue d'une bonne préhension de la motte.

De préférence, à la fin du mouvement d'enfoncement des éléments de préhension dans la motte, on resserre les éléments de préhension pour amener leurs extrémités libres à la position rapprochée.

Ce resserrement, en fin d'enfoncement des éléments de préhension dans la motte, provoque une compression radiale et un serrage de la motte, de sorte que même une motte ayant tendance à adhérer à la paroi de l'alvéole et peut être extraite de l'alvéole sans endommagement.

Le dispositif pour la mise en oeuvre du procédé conforme à l'invention comprend au moins une tête de préhension avec plusieurs éléments de préhension allongés en forme d'aiguilles ou de lames, convergeant vers le bas, et des moyens de manoeuvre des éléments de préhension pour enfoncer ces éléments dans une alvéole d'une plaque alvéolée et les retirer de cette alvéole. Selon l'invention, la tête de préhension comprend un élément de support monté mobile en translation verticale et portant les extrémités supérieures des éléments de préhension. Elle comprend, en outre, un élément de guidage monté mobile en translation verticale en dessous de l'élément de support pour guider les éléments de préhension de manière qu'ils convergent vers le bas. Elle comprend, de plus, des moyens de manoeuvre pour déplacer en translation verticale l'élément de support et des moyens de manoeuvre pour déplacer en translation verticale l'élément de guidage. Enfin, elle comprend des moyens de commande pour commander les moyens de manoeuvre de l'élément de support et les moyens de manoeuvre de l'élément de guidage.

De préférence, l'élément de support peut être monté mobile en translation verticale sur l'élément de guidage lui-même monté mobile en translation verticale sur la tête de préhension, les moyens de manoeuvre de l'élément de support étant intercalés entre ce dernier et l'élément de guidage.

Le mouvement de descente de l'élément de support et des éléments de préhension jusqu'à l'engagement des extrémités inférieures de ces derniers en position rapprochée dans la partie supérieure de l'alvéole peut, en principe, être limité par n'importe quel moyen.

Toutefois, suivant un mode de réalisation particulièrement simple, le dispositif comprend à cet effet un élément de retenue mécanique effaçable coopérant avec l'élément de support pour limiter le mouvement de descente de l'élément de support.

Pour permettre son effacement, l'élément de retenue mécanique peut être de préférence monté mobile en translation verticale sous l'action de moyens de manoeuvre commandés, de préférence des vérins à fluide.

Les moyens de manoeuvre de l'élément de support et de l'élément de guidage peuvent également comprendre avantageusement des vérins à fluide à double effet alimentés par des distributeurs commandés de manière à permettre la mise hors pression d'un vérin lors de la mise sous pression de l'autre, et inversement, donc un "débrayage" réciproque de vérins sous l'action d'une commande, par exemple par automate.

L'élément de guidage peut comporter, pour le guidage des éléments de préhension, des ouvertures de guidage disposées sur un cercle ou sur un polygone plus petit que le cercle ou le polygone de montage des extrémités supérieures des éléments de préhension sur l'élément de support.

Dans le cas d'un dispositif comprenant plusieurs têtes de préhension disposées côte à côte pour la préhension de plusieurs mottes dans plusieurs alvéoles d'une rangée transversale d'alvéoles d'une plaque, l'élément de retenue peut être constitué par une barre transversale commune à toutes les têtes de préhension.

En se référant aux dessins schématiques annexés, on va décrire ci-après plus en détail un mode de réalisation illustratif du dispositif conforme à l'invention et les différentes étapes de la préhension d'une motte à l'aide de ce dispositif.

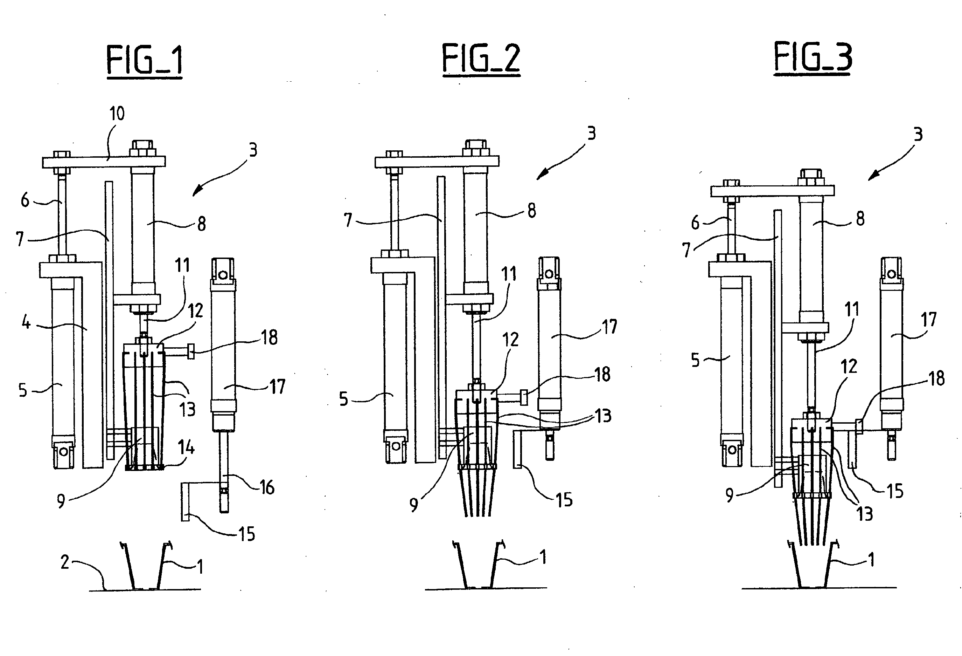

Selon la figure 1, un dispositif pour la préhension d'une motte de terreau non représentée contenue dans une alvéole 1 par exemple tronconique d'une plaque alvéolée de semis ou d'élevage telle qu'utilisée couramment en culture horticole ou maraîchère, disposée sur une surface de support 2 horizontale, par exemple d'un transporteur, comprend une tête de préhension 3 installée à distance au-dessus de la surface de support 2.

La tête de préhension 3 est montée sur une équerre de support 4 stationnaire et comprend un vérin à fluide 5 à double effet fixé en position verticale sur l'aile horizontale de l'équerre de support 4, la tige de piston 6 du vérin 5 étant tournée vers le haut. L'aile verticale de l'équerre de support 4 sert de coulisse verticale à un coulisseau 7 portant en partie haute un vérin à fluide 8 à double effet et en partie basse un élément de guidage 9.

Le vérin 8 est fixé, à son extrémité supérieure, par une traverse 10, à l'extrémité supérieure de la tige de piston 6, la tige de piston 11 du vérin 8 étant tournée vers le bas. La tige 8 porte, à son extrémité libre, un élément de support 12 sur lequel sont montées, par exemple articulées sur un cercle, les extrémités supérieures de plusieurs aiguilles 13 s'étendant vers le bas en traversant des ouvertures de guidage 14, également réparties sur un cercle, de l'élément de guidage 9 évidé vers le bas ou creux.

Il est à noter que le cercle sur lequel sont réparties les ouvertures de guidage 14 de l'élément de guidage 9, est plus petit que le cercle sur lequel les extrémités supérieures des aiguilles 13 sont montées sur l'élément de support 12. De ce fait, les aiguilles 13 convergent vers le bas.

On reconnaît par ailleurs sur la figure 1 un élément de retenue 15 fixé à la tige de piston 16 d'un vérin 17 à double effet monté verticalement en position stationnaire de telle manière que l'élément de retenue 15 se trouve situé verticalement en dessous d'une butée 18 faisant saillie sur l'élément de support 12 en direction du vérin 17.

Il est à noter que les deux vérins 5 et 8 à double effet sont alimentés par des distributeurs à deux voies commandés de telle manière que, lors de la mise sous pression d'un vérin, l'autre vérin peut être mis hors pression.

L'ensemble de la commande du dispositif peut se faire, par exemple, par un automate non représenté comme n'entrant pas dans le cadre de l'invention.

En se référant aux figures 1 à 8, on va décrire ci-après les différentes phases de la préhension d'une motte dans l'alvéole 1 à l'aide de la tête de préhension 3.

Selon la figure 1, le vérin 5 est alimenté de manière que sa tige de piston 6 soit complètement sortie et le vérin 8 est alimenté de manière que sa tige de piston 11 soit complètement rentrée. L'ensemble comprenant le coulisseau 7, le vérin 8 et l'élément de guidage 9, se trouve ainsi en position haute et l'élément de support 12 avec les aiguilles 13 convergeant vers le bas se trouve également en position haute, les extrémités libres des aiguilles 13 étant écartées. La tige de piston 15 du vérin 17 est complètement sortie, l'élément de retenue 15 se trouvant en position basse.

Selon la figure 2, le coulisseau 7 portant le vérin 8 se trouve toujours en position haute, sous l'action du vérin 5. Par contre, le vérin 8 est alimenté de manière à faire sortir sa tige de piston 11, ce qui amène l'élément de support 12 en position basse par rapport à l'élément de guidage 9, de sorte que les aiguilles 13 se trouvent abaissées, leurs extrémités libres étant rapprochées, à distance au-dessus de l'alvéole 1.

En même temps, par alimentation du vérin 17, l'élément de retenue 15 est relevé à faible distance en dessous de la butée 18 de l'élément de support 12.

Selon la figure 3, alors que les vérins 8 et 17 restent alimentés comme sur la figure 2, la tige de piston 11 étant sortie, donc l'élément de support 12 avec les aiguilles 13 abaissé par rapport à l'élément de guidage 9, et l'élément de retenue 15 relevé, on inverse l'alimentation du vérin 5 pour faire rentrer la tige de piston 6, donc pour faire descendre l'ensemble comprenant le coulisseau 7, le vérin 8, l'élément de support 12 avec les aiguilles 13 et l'élément de guidage 9 jusqu'à l'appui de la butée 18 sur l'élément de retenue 15, les extrémités libres des aiguilles 13 restant rapprochées. La position en hauteur de l'élément de retenue 15 est choisie de manière que les extrémités inférieures rapprochées des aiguilles 13 se trouvent ainsi engagées dans la partie supérieure de l'alvéole 1, sans être enfoncées (ou en tout cas sans être enfoncées profondément) dans la motte contenue dans l'alvéole 1.

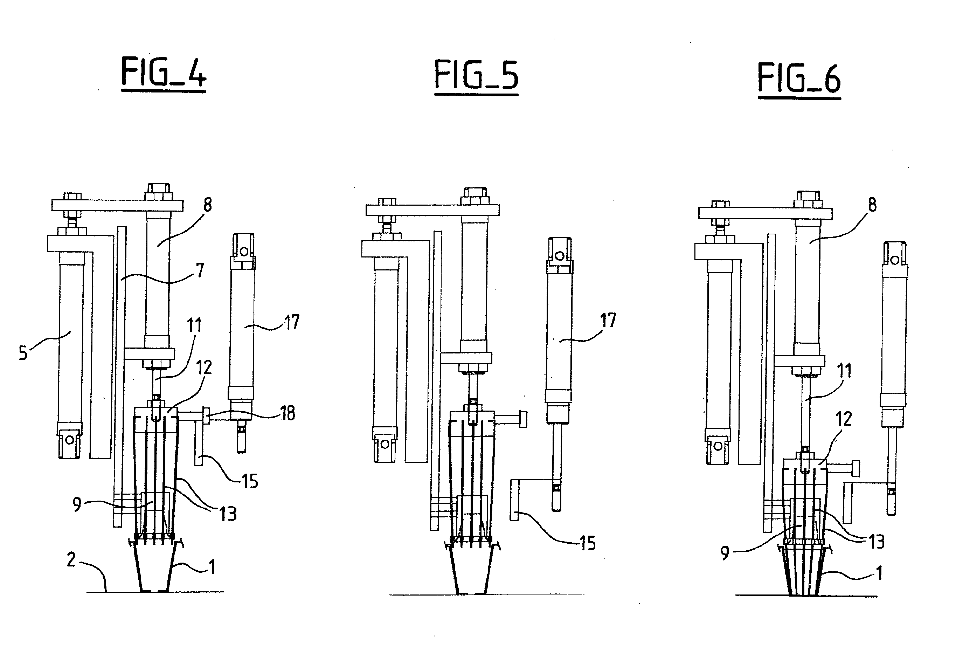

Selon la figure 4, le vérin 17 restant alimenté de manière à maintenir l'élément de retenue 15 en position relevée, le vérin 8 est mis hors pression alors que le vérin 5 continue d'être alimenté de telle sorte que le vérin 5 fasse descendre l'ensemble comprenant le coulisseau 7, le vérin 8 et l'élément de guidage 9, alors que l'élément de support 12 avec les aiguilles 13 est maintenu en position par appui de la butée 18 sur l'élément de retenue 15, la tige de piston 11 rentrant dans le vérin 8.

La descente de l'élément de guidage 9 par rapport à l'élément de support 12 provoque un écartement des extrémités libres des aiguilles 13, ce qui produit un centrage de l'alvéole 1 par rapport aux aiguilles 13, à condition que la plaque alvéolée ne soit pas bloquée en position sur la surface de support 2.

Selon la figure 5, le vérin 17 est alimenté de manière à abaisser l'élément de retenue 15, alors que les aiguilles 13 sont maintenues dans la position selon la figure 4.

En même temps, selon la figure 6, le vérin 8 est alimenté de manière que sa tige de piston 11 sorte vers le bas et fasse descendre l'élément de support 12 par rapport à l'élément de guidage 9 maintenu en position par le vérin 5 bloqué en position, de sorte que les aiguilles 13 sont enfoncées de manière convergente dans l'alvéole 1, à proximité de la paroi de l'alvéole 1, en longeant cette dernière, leurs extrémités inférieures se rapprochant au fur et à mesure de cet enfoncement.

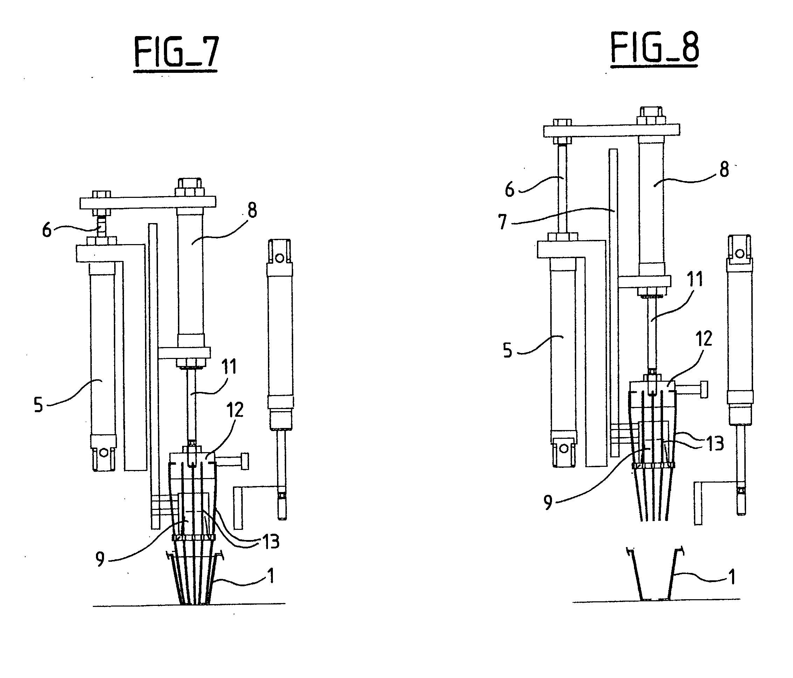

Selon la figure 7, lorsque les extrémités inférieures des aiguilles 13 ont atteint le fond de l'alvéole 1, le vérin 5 est alimenté pour faire sortir vers le haut sa tige de piston 6, alors que la tige de piston 11 reste bloquée dans le vérin 8 qui, en remontant, relève l'élément de guidage 9 par rapport à l'élément de support 12, provoquant ainsi un resserrement des aiguilles 13, donc un serrage et une compression de la motte contenue dans l'alvéole 1.

Selon la figure 8, le vérin 5 continue d'être alimenté dans le sens de sortie de sa tige de piston 6, ce qui entraîne une remontée de l'ensemble comprenant le coulisseau 7 avec l'élément de guidage 9, le vérin 8 avec sa tige de piston 11 toujours bloquée dans le vérin 8, l'élément de support 12 et les aiguilles 13 toujours en position rapprochée, de sorte que la motte maintenue par les aiguilles 13 rapprochées se trouve ainsi dégagée vers le haut de l'alvéole 1.

Pour la replantation de la motte toujours suspendue aux aiguilles dans une autre alvéole, on abaisse la motte selon la figure 7 dans cette autre alvéole et on la libère dans cette dernière en passant successivement, dans le sens inverse de la préhension, par les positions suivant la figure 6 (écartement des aiguilles), la figure 5 (retrait des aiguilles) pour revenir enfin à la position de départ de la figure 1 en vue de la prise d'une nouvelle motte dans une alvéole.

Il y a lieu de remarquer que le mode de réalisation représenté et décrit n'a été donné qu'à titre d'exemple illustratif et que le procédé et le dispositif, objets de l'invention, admettent de nombreuses modifications et variantes par rapport à ce mode de réalisation.

Ainsi, l'élément de retenue 15, grâce auquel les aiguilles, lorsque leurs extrémités inférieures sont engagées en position rapprochée dans la partie supérieure de l'alvéole, subissent un écartement avant d'être enfoncées dans la motte contenue dans l'alvéole, pourrait être remplacé par d'autres moyens permettant d'obtenir le même résultat.

Cependant, l'élément de retenue 15 qui, dans le cas d'un dispositif de préhension comprenant plusieurs têtes de préhension disposées côte à côte en vue de la préhension de plusieurs mottes dans plusieurs alvéoles d'une rangée transversale d'alvéoles d'une plaque, peut être constitué par une barre de retenue transversale commune à toutes les têtes de préhension, présente l'avantage de constituer un moyen particulièrement simple pour commander l'écartement de toutes les têtes de préhension dans les alvéoles, avant enfoncement des éléments de préhension dans les mottes.

De même, il serait concevable de remplacer les vérins 5 et 8 par d'autres moyens de translation, mais l'utilisation de vérins à fluide à double effet alimentés par des distributeur commandés de façon appropriée présente l'avantage de permettre un "débrayage" réciproque des deux vérins,

Au lieu de permettre aux aiguilles, en fin d'enfoncement dans la motte, de buter, par leurs extrémités libres, sur le fond de l'alvéole (figure 6), il serait possible de prévoir, sur l'élément de support 12 des aiguilles 13, un élément de butée qui vient prendre appui sur le dessus de la plaque alvéolée, à l'extérieur de l'alvéole, évitant ainsi aux extrémités libres des aiguilles de frotter sur le fond de l'alvéole.

Les aiguilles pourraient également être remplacées par des lames ou des éléments de préhension semblables.

Enfin, il y a lieu de remarquer que l'invention est applicable non seulement à la préhension de mottes portant des plants, donc à la transplantation de plants en mottes, mais également par exemple à l'extraction de mottes dépourvues de plants, ou portant des plants chétif, d'une plaque alvéolée, par exemple sur une "repareuse" servant de façon connue en soi à remplacer, dans une plaque de semis ou d'élevage, par des mottes portant des plants de taille correcte, les mottes dépourvues de plants ou portant des plants chétifs, ce qui implique une extraction préalable, de cette plaque, des mottes à remplacer qui sont particulièrement friables.

En effet, grâce à l'utilisation d'un nombre suffisant d'aiguilles et grâce au resserrage des aiguilles en fin d'enfoncement, la tête de préhension suivant l'invention permet de saisir et de prélever sans problèmes également de telles mottes friables.

## Revendications

1. Procédé de préhension d'une motte contenue dans une alvéole en tronc de cône ou de pyramide d'une plaque alvéolée de semis ou d'élevage telle qu'utilisée en culture horticole ou maraîchère, consistant à enfoncer vers le bas dans la motte à saisir plusieurs éléments de préhension allongés en forme d'aiguilles ou de lames, convergeant vers le bas, par un mouvement de descente des éléments de préhension amenant les extrémités inférieures de ces éléments d'une position réciproque écartée au-dessus de la motte progressivement à une position réciproque rapproché vers le bas de la motte, et à retirer de l'alvéole la motte suspendue aux éléments de préhension, par un mouvement de montée des éléments de préhension, les extrémités inférieures de ces derniers étant maintenues en position rapprochée, **caractérisé par le fait qu'**avant d'enfoncer les éléments de préhension dans la motte contenue dans l'alvéole, on amène les extrémités inférieures des éléments de préhension en position rapprochée au-dessus de l'alvéole contenant la motte à saisir, on abaisse les éléments de préhension pour engager leurs extrémités inférieures dans cette position rapprochée dans la partie supérieure de l'alvéole et on amène les extrémités inférieures des éléments de préhension à la position écartée pour centrer l'alvéole sur les éléments de préhension.

2. Procédé suivant la revendication 1, **caractérisé par le fait qu'**à la fin du mouvement d'enfoncement des éléments de préhension dans la motte, on resserre les éléments de préhension pour amener leurs extrémités libres à la position rapprochée.

3. Dispositif pour la mise en oeuvre du procédé suivant l'une quelconque des revendications précédentes, comprenant au moins une tête de préhension avec plusieurs éléments de préhension allongés en forme d'aiguilles ou de lames, convergeant vers le bas, et des moyens de manoeuvre des éléments de préhension pour enfoncer ces éléments dans une alvéole d'une plaque alvéolée et les retirer de cette alvéole, **caractérisé par le fait que** la tête de préhension (3) comprend un élément de support (12) monté mobile en translation verticale, sur lequel sont montées les extrémités supérieures des éléments de préhension (13), un élément de guidage (9) monté mobile en translation verticale en dessous de l'élément de support pour guider les éléments de préhension de manière qu'ils convergent vers le bas, un élément de retenue (15) monté mobile en translation verticale, pour limiter le mouvement de descente de l'élément de support, des moyens de manoeuvre (8) pour déplacer en translation verticale l'élément de support, des moyens de manoeuvre (5) pour déplacer en translation verticale l'élément de guidage (9), des moyens de manoeuvre (17) pour déplacer en translation verticale l'élément de retenue (15) en vue de son effacement et des moyens de commande pour commander les moyens de manoeuvre de l'élément de support, les moyens de manoeuvre de l'élément de guidage et les moyens de manoeuvre de l'élément de retenue.

4. Dispositif suivant la revendication 3, **caractérisé par le fait que** l'élément de support (12) est monté mobile en translation verticale sur l'élément de guidage (9) lui-même monté mobile en translation verticale, les moyens de manoeuvre (8) de l'élément de support étant intercalés entre ce dernier et l'élément de guidage.

5. Dispositif suivant la revendication 3 ou 4, **caractérisé par le fait que** les moyens de manoeuvre de l'élément de support et de l'élément de guidage comprennent des vérins à fluide (5, 8) à double effet alimentés par des distributeurs commandés de manière à permettre la mise hors pression d'un vérin lors de la mise sous pression de l'autre, et inversement.

6. Dispositif suivant l'une quelconque des revendications 3 à 5, **caractérisé par le fait que** l'élément de guidage (9) comporte, pour le guidage des éléments de préhension (13), des ouvertures de guidage (14) disposées sur un cercle ou sur un polygone plus petit que le cercle ou le polygone de montage des extrémités supérieures des éléments de préhension sur l'élément de support (12).

7. Dispositif suivant l'une quelconque des revendications 3 à 6, comprenant plusieurs têtes de préhension disposées côte à côte pour la préhension de plusieurs mottes dans plusieurs alvéoles d'une rangée transversale d'alvéoles d'une plaque, **caractérisé par le fait que** l'élément de retenue est constitué par une barre transversale (15) commune à toutes les têtes de préhension disposées côte à côte.
